# EUROPÄISCHE PATENTSCHRIFT

(11) **EP 0 535 290 B1**
(45) Veröffentlichungstag und Bekanntmachung des Hinweises auf die Patenterteilung: **30.11.1994**
(21) Anmeldenummer: 91890198.4
(22) Anmeldetag: 02.09.1991
(51) Int. Cl.: C11C 3/04, B01J 31/12

(54) **Verfahren und Vorrichtung zur kontinuierlichen Herstellung von Fettsäureestern**
Process and apparatus for continuous production of fatty acid esters
Procédé et installation pour la production continue d'esters d'acides gras

(43) Veröffentlichungstag der Anmeldung: 07.04.1993
(73) Patentinhaber: Primavesi, Markus, 2340 Mödling (AT); Primavesi, Paul, 1030 Wien (AT)
(72) Erfinder: Kiehtreiber, Werner, A-1160 Wien (AT)
(74) Vertreter: Haffner, Thomas M., Dr.

(56) Entgegenhaltungen:
- EP-A- 0 127 104
- EP-A- 0 283 379
- DE-A- 3 446 720
- US-A- 2 383 633
- WORLD PATENTS INDEX Section Ch, Week 7623, 1976 Derwent Publications Ltd.,
- London, GB; Class D, AN 76-43194X
- JOURNAL OF THE AMERICAN OIL CHEMISTS' SOCIETY Bd. 61, Nr. 10, 1984, Seiten 1593- 1597; G.R. PETERSON AND W.P. SCARRAH: 'RAPESEED OIL TRANSESTERIFICATION BYHETEROGENEOUS CATALYSTS'
- WORLD PATENTS INDEX LATEST Section Ch, Week 8720, 1987 Derwent PublicationsLtd., London, GB; Class A, AN 87-140925
- FAT SCIENCE TECHNOLOGY Bd. 90, Nr. 1, 1988, Seiten 28 - 32; H. STAGE:'PRINCIPLE OF THE NEW ATT-PROCESS FOR CONVERTING VEGETABLE OILS TO DIESELFUELS'

## Beschreibung

Die Erfindung bezieht sich auf ein verfahren zur kontinuierlichen Herstellung von Fettsäureestern aus pflanzlichen und tierischen Ölen oder Fetten durch Umesterung mit einwertigen niedrigen Alkoholen unter Verwendung von Metallalkoholaten als Umesterungskatalysator, worauf Glycerin abgetrennt und das Produkt gereinigt wird, sowie auf eine Vorrichtung zur Durchführung dieses Verfahrens.

Aus der AT-PS 386 222 ist bereits ein Verfahren und eine Vorrichtung zur Herstellung eines als Kraft- bzw. Brennstoff geeigneten Fettsäureestergemisches aus verschiedenen pflanzlichen und tierischen Fetten und Ölen bekannt geworden. Prinzipiell erfolgt bei dem vorbekannten Verfahren eine Umesterung bzw. Alkoholyse, bei welchem niedere aliphatische Alkohole, bevorzugt Methanol, mit den genannten Ölen oder Fetten umgesetzt werden. Als Beispiel für Fette bzw. Öle, wie sie mit dem vorbekannten Verfahren umgesetzt werden können wurden Rapsöl, Sonnenblumenöl, Sojaöl, Maisöl, Baumwollöl, Mandelöl, Erdnußöl, Palmöl, Kokosöl, Leinsaatöl, Rhizinusöl, Schmalz, Talg, Fischöle, Waltran, Lipide von Meeres- und Landtieren und pflanzliche Lipide genannt.

Die Umsetzung erfolgt bei dem Verfahren gemäß der AT-PS 386 222 unter basischer Katalyse und es wurde im konkreten eine bestimmte Mindestmenge an Kalilauge verlangt, um mit geringerem Alkoholüberschuß arbeiten zu können. Neben der Verwendung derartiger alkalischer Umesterungskatalysatoren sind in der AT-PS 386 222 weitere Umesterungskatalysatoren und im besonderen Metallalkoholate, -hydride, -carbonate, -azetate oder verschieden Säuren als bekannte Umesterungskatalysatoren genannt.

In der AT-PS 386 222 wird im übrigen die Auffassung vertreten, daß das vorbekannte Verfahren sich auch für die kontinuierliche Herstellung derartiger Fettsäureestergemische eignet, jedoch ist da die Umesterung unter den bekannten Bedingungen nicht in kürzerer Zeit als etwa ein bis zwei Stunden ablaufen kann, das beschriebene Verfahren für einen kontinuierlichen Betrieb nicht geeignet. Ein wesentlicher geschwindigkeitsbestimmender Schritt bei der bekannten Umesterung ist hiebei in der Tatsache zu suchen, daß aufgrund der verwendeten Kalilauge relativ hohe Wassermengen im Reaktionsgemisch enthalten sind.

Die Erfindung zielt nun darauf ab, ein Verfahren der eingangs genannten Art dahingehend weiterzubilden, daß ein problemloser, kontinuierlicher Betrieb möglich wird und eine raschere Umsetzung gelingt. Da die Umsetzung bei Temperaturen nahe dem Siedepunkt des verwendeten Alkohols für die Umesterung durchgeführt wird soll durch diese raschere Umsetzung gleichzeitig eine wesentliche Einsparung an Energie gewährleistet werden.

Zur Lösung dieser Aufgabe besteht das erfindungsgemäße Verfahren im wesentlichen darin, daß als Umesterungskatalysator ein Gemisch aus Alkalioxiden und/oder Erdalkalioxiden und Alkalialkoholaten und/oder Erdalkalialkoholaten eingesetzt wird. Dadurch, daß als Umesterungskatalysatoren Alkali- bzw. Erdalkalioxide eingesetzt werden, wird sichergestellt, daß die sowohl mit dem Methanol als auch mit dem eingesetzten pflanzlichen oder tierischen Ölen, insbesondere dann, wenn es sich um Abfallöle oder Fette handelt, eingetragene Wassermenge rasch und zuverlässig abgebunden wird und den Umesterungsprozeß nicht behindert. Die gleichzeitige Verwendung von derartigen Alkalioxiden bzw. Erdalkalioxiden mit Alkalialkoholaten und/oder Erdalkalialkoholaten hat einen wirkungsvollen Katalysator ergeben, mit welchem Umsetzungszeiten von unter 5 min ohne weiteres realisiert werden können, wodurch die Möglichkeit geschaffen wird, mit konstruktiv kleinbauenden Durchflußreaktoren das Auslangen zu finden. Die konstruktive Verkleinerung derartiger Durchflußreaktoren führt wiederum dazu, daß der Aufwand für die Aufrechterhaltung der Umsetzungstemperatur wesentlich herabgesetzt werden kann und insbesondere die bei großen Reaktoren notwendigerweise gegebenen Abstrahlverluste des Reaktors selbst ohne aufwendige Isoliermaßnahmen eliminiert werden. Insgesamt ergibt sich dadurch eine energetische Einsparung und durch den Umstand, daß aufgrund des gewählten Umesterungskatalysators mit entsprechend kurzen Reaktionszeiten gearbeitet werden kann, läßt sich mit kleinbauenden und leichter zu isolierenden Anlagen eine hohe Durchsatzmenge und damit ein kontinuierlicher Betrieb problemlos verwirklichen.

Gemäß einer bevorzugten Weiterbildung des erfindungsgemäßen Verfahrens wird so vorgegangen, daß die Umesterung in einem Durchflußreaktor vorgenommen wird, daß gebildetes Glycerin anschließend in einer Durchlaufzentrifuge gemeinsam mit ggf. gebildeten Seifen abgetrennt werden und daß anschließend Schwebestoffe aus dem Produkt durch Filtern abgetrennt werden. Die Verwendung einer Durchlaufzentrifuge ermöglicht eine rasche und sichere Abtrennung von Umsetzungsprodukten, welche aus dem Endprodukt entfernt werden sollen, da die gebildeten Fettsäureestergemische in der Regel ein wesentlich geringeres spezifisches Gewicht aufweisen als die übrigen Produkte der Umesterung. Die Verwendung einer Durchlaufzentrifuge erlaubt hiebei die Verarbeitung großer Durchflußmengen, wodurch kontinuierlich auch größere Durchflußmengen des vorangehenden Durchflußreaktors mühelos aufgetrennt werden können. Schließlich gelingt es mit einer einfachen Filterung gegebenenfalls noch enthaltene Schwebstoffe, insbesondere Teile des Kataloysatorgemisches, aus dem Endprodukt sicher abzutrennen. Eine derartige Filterung eliminiert auch feste Schwebstoffe, wie sie mit den Einsatzmaterialien eingetragen werden und das erfindungsgemäße kontinuierliche Verfahren eignet sich daher auch für weitgehend ungereinigte Ausgangsmaterialien bzw. Abfallöle oder -fette.

Besonders kurze Umesterungszeiten werden dann erreicht, wenn, wie es einer bevorzugten Ausbildung entspricht, als Umesterungskatalysator 0,5 bis 5 Gew.%, vorzugsweise 1 bis 2 Gew.%, Alkali- und/oder Erdalkalioxide bezogen auf das eingesetzte Öl oder Fett eingesetzt werden, wobei vorzugsweise Alkali- und/oder Erdalkalialkoholate in einer Menge von 5 bis 30 Gew.% der Oxide eingesetzt werden. Mit derartigen Umesterungskatalysatoren konnten Reaktionszeiten verwirklicht werden, bei welchen bereits innerhalb von 30 sek eine vollständige Umesterung erzielt werden konnte.

Bevorzugt wird die Umesterung bei einer Temperatur von 65 bis 75°C vorgenommen. Bedingt durch die kleinbauenden und daher auch entsprechend druckfest ausgebildeten Durchflußreaktoren, wie sie im Rahmen des erfindungsgemäßen Verfahrens Verwendung finden können, ist es aber besonders vorteilhaft, die Umesterung bei überatmosphärischen Druck vorzunehmen. Durch eine derartige Maßnahme wird zum einen die Möglichkeit geschaffen, die Reaktionstemperatur zu erhöhen und damit die Umsetzungszeit weiter zu verkürzen, zum anderen bietet ein Arbeiten unter überatmosphärischen Druck während der Umesterung die Möglichkeit, nach einem Ausschleusen in die nachfolgende Durchlaufzentrifuge unmittlebar eine Rekuperation des überschüssigen eingesetzten niederen Alkoholes zu erzielen, welcher bei Druckabfall spontan verdampft und dem Mischer bzw. dem Durchflußreaktor in einfacher Weise rückgeführt werden kann. Eine erfindungsgemäß besonders bevorzugte Vorrichtung zur Durchführung des Verfahrens ist hiebei im wesentlichen gekennzeichnet durch einen rohrförmigen Durchflußreaktor, eine an den Durchflußreaktor angeschlossene Durchlaufzentrifuge und eine Filteranlage, wodurch sich die oben bereits ausführlich dargestellten Vorteile in bezug auf die Energiebilanz und den geringen Platzbedarf einer Anlage für große Durchsatzmengen ergeben. In besonders einfacher Weise kann die Ausbildung hiebei so getroffen werden, daß der Durchflußreaktor eine Eintrags- und eine Austragsdruckschleuse aufweist, wodurch die oben bereits erwähnte Umesterung unter Anwendung eines überatmosphärischen Druckes ohne weiteres durchgeführt werden kann, wobei schließlich die Rückführung der von nach dem Verlassen des Durchflußreaktors durch Druckminderung spontan evaporierendem Alkohol in besonders einfacher Weise dann gelingt, wenn die Ausbildung der Vorrichtung so getroffen ist, daß vor der Durchlaufzentrifuge ein Rekuperator angeschlossen ist, von welchem ausgehend eine Leitung zur Eintragsschleuse des Durchflußreaktors bzw. einem vorgeschalten Mischer geführt ist.

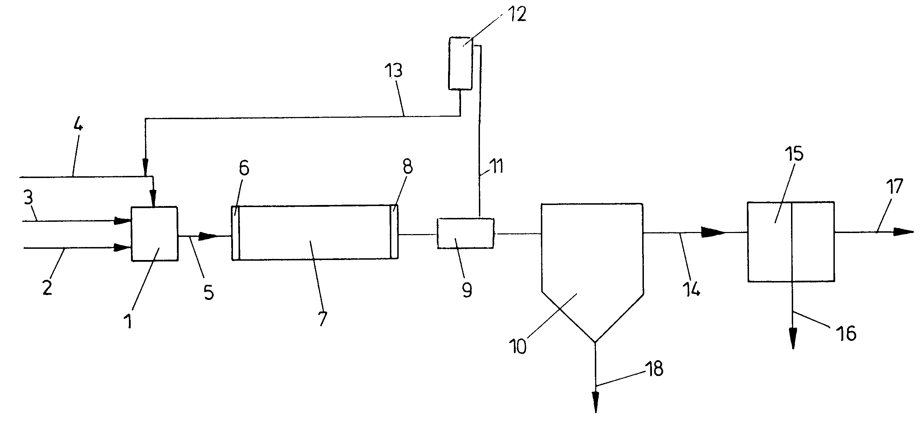

Die Erfindung wird nachfolgend anhand eines in der Zeichnung schematisch dargestellten Ausführungsbeispieles näher erläutert. In der Figur ist schematisch eine Anlage zur Durchführung des erfindungsgemäßen Verfahrens gezeigt.

Eine derartige Vorrichtung besteht aus einem Mischer bzw. einer Pumpe 1, in welchen Leitungen 2, 3 und 4 für die Zufuhr der Reaktanten münden. Die Leitung 2 wird hiebei als Zuführungsleitung für das umzusetzende Einsatzmaterial, nämlich pflanzliche oder tierische Öle sowie gegebenenfalls auch Abfallöle bezeichnet. Über Leitung 3 wird das erforderliche Gemisch der Umesterungskatalysatoren, nämlich Alkali- bzw. Erdalkalioxide und Alkali- bzw. Erdalkalialkoholate in einem vorgegebenen Mischungsverhältnis als Lösung bzw. Suspension in einem einwertigen Alkohol dem Mischer 1 zugeführt. Über Leitung 4 wird schließlich der für die Umesterung erforderliche niedrige einwertige Alkohol, wie beispielsweise Etahnol oder Methanol eingebracht. Das Gemisch aus Öl, Katalysator und niedrigem, einwertigen Alkohol wird über Leitung 5 einer Druckschleuse 6 eines Durchflußreaktors 7 zugeführt. Der Durchflußreaktor 7 ist hiebei druckfest ausgebildet und wird über eine in dem Mantel des Reaktors vorgesehene, indirekte Beheizung erwärmt. Über eine weitere Druckschleuse 8 wird das erhaltene Fettsäureestergemisch samt Nebenprodukten und nicht umgesetzten Katalysatoren bzw. niedrige Alkohole über einen Abscheider 9 einer Durchlaufzentrifuge 10 zugeführt. Durch die Druckverringerung des Reaktionsgemisches nach dem Verlassen der zweiten Druckschleuse 8 verdampft überschussiger einwertiger Alkohol und wird über eine Leitung 11 einem Rekuperator 12 zugeführt. In dem Rekuperator 12 wird der Alkohol wiederum kondensiert und über Leitung 13 der Zuführungsleitung 4 wiederum rückgeführt.

Die weiteren aus dem Durchlaufreaktor 7 ausgetragenen Produkte werden in der Durchlaufzentrifuge aufgrund ihres deutlich unterschiedlichen spezifischen Gewichtes getrennt und es wird aus der Durchlaufzentrifuge 10 über Leitung 14 durch Abtrennung das von Nebenprodukten der Reaktion gereinigte Fettsäureestergemisch ausgetragen und einer Filteranlage 15 zugeführt. In der Filteranlage 15 werden gegebenenfalls noch dem Fettsäureestergemisch enthaltene Schwebstoffe, welche entweder direkt aus dem Einsatzmaterial stammen können oder welche Teile des nicht umgesetzten und in der Zentrifuge nicht abgetrennten Katalysators darstellen können, abfiltriert und über Leitung 16 aus der Filteranlage ausgetragen. Das gereinigte Endprodukt wird über Leitung 17 aus der Filteranlage ausgetragen und ist unmittelbar als Kraft- bzw. Brennstoff geeignet.

Die in der Durchlaufzentrifuge abgeschiedenen Nebenprodukte wie Glycerin oder gegebenenfalls gebildete Seifen werden aus der Durchlaufzentrifuge 10 über Leitung 18 abgetrennt und aus dem System entfernt.

Das erfindungsgemäße Verfahren wird nachfolgend anhand eines Laborversuches näher erläutert:
In einem 1l-Tropftrichter werden 600 g unraffiniertes Rapsöl vorgelegt und mit 85 g Methanol, in dem 19 g Calciumoxid suspendiert und danach 0,9 g Na-Metall gelöst wurden, versetzt. Diese Mischung läßt man über eine Silikonschlauchleitung durch die Glasrohrschlange eines Durchflußreaktors bzw. eines Schlangenkühlers rinnen. Der Reaktor bzw. Kühler selbst wird mit Wasser mit einer Vorlauftemperatur von 72°C mittels eines Umwälzthermostats auf Reaktionstemperatur gehalten. Die Durchflußgeschwindigkeit des Reaktionsgemisches wird so gewählt, daß eine Verweilzeit von ca. 40 s in der temperierten Glasrohrschlange gewährleistet ist. Das aus der Glasrohrschlange abgeführte Reaktionsprodukt wird unmittelbar in Zentrifugengläser abgefüllt und ca. 2 Minuten bei 3000 U/Min abzentrifugiert, das überstehende Methylestergemisch wird abdekantiert und über eine Filternutsche mit einem Glasfaserfilter vakuumfiltriert. Der auf diese Weise erhaltene Rapsölmethylester ergab folgende Analysenwerte:

| | |
|---|---|
| Dichte bei 20°C | 0.882 g/cm³ |
| Viskosität bei 20°C | 8,16 mPa.s |
| | 9,25 mm²/s |
| Flammpunkt | 160°C |
| Cloud Point | -9°C |
| fester Bodensatz | -11°C |
| Pour Point | -18°C. |

## Patentansprüche

1. Verfahren zur kontinuierlichen Herstellung von Fettsäureestern aus pflanzlichen und tierischen Ölen oder Fetten durch Umesterung mit einwertigen niedrigen Alkoholen unter Verwendung von Metallalkoholaten als Umesterungskatalysator, worauf Glycerin abgetrennt und das Produkt gereinigt wird, dadurch gekennzeichnet, daß als Umesterungskatalysator ein Gemisch aus Alkalioxiden und/oder Erdalkalioxiden und Alkalialkoholaten und/oder Erdalkalialkoholaten eingesetzt wird.

2. Verfahren nach Anspruch 1, dadurch gekennzeichnet, daß die Umesterung in einem Durchflußreaktor (7) vorgenommen wird, daß gebildetes Glycerin anschließend in einer Durchlaufzentrifuge (10) gemeinsam mit ggf. gebildeten Seifen abgetrennt werden und daß anschließend Schwebestoffe aus dem Produkt durch Filtern abgetrennt werden.

3. Verfahren nach Anspruch 1 oder 2, dadurch gekennzeichnet, daß 0,5 bis 5 Gew.%, vorzugsweise 1 bis 2 Gew.%, Alkali und/oder Erdalkalioxide bezogen auf das eingesetzte Öl oder Fett eingesetzt werden.

4. Verfahren nach einem der Ansprüche 1, 2 oder 3, dadurch gekennzeichnet, daß Alkali- und/oder Erdalkalialkoholate in einer Menge von 5 bis 30 Gew.% der Oxide eingesetzt werden.

5. Verfahren nach einem der Ansprüche 1 bis 4, dadurch gekennzeichnet, daß die Umesterung bei einer Temperatur von 65 bis 75°C vorgenommen wird.

6. Verfahren nach einem der Ansprüche 1 bis 5, dadurch gekennzeichnet, daß die Umesterung bei überatmosphärischem Druck vorgenommen wird.

7. Verfahren nach einem der Ansprüche 1 bis 6, dadurch gekennzeichnet, daß die Verweilzeit der Reaktanten im Durchflußreaktor (7) kleiner 3 min, vorzugsweise 30 bis 60 sec, gewählt wird.

8. Vorrichtung zur Durchführung des Verfahrens nach einem der Ansprüche 1 bis 7, gekennzeichnet durch einen rohrförmigen Durchflußreaktor (7), eine an den Durchflußreaktor angeschlossene Durchlaufzentrifuge (10) und eine Filteranlage (15).

9. Vorrichtung nach Anspruch 8, dadurch gekennzeichnet, daß der Durchflußreaktor (7) eine Eintrags- (6) und eine Austragsdruckschleuse (8) aufweist.

10. Vorrichtung nach Anspruch 8 oder 9, dadurch gekennzeichnet, daß vor der Durchlaufzentrifuge (10) ein Rekuperator (12) angeschlossen ist, von welchem ausgehend eine Leitung (13) zur Eintragsschleuse des Durchflußreaktors (7) bzw. einem vorgeschalten Mischer (1) geführt ist.

## Claims

1. Process for the continuous production of fatty acid esters from plant and animal oils or fats by transesterification with monohydric lower alcohols using metal alkoxides as transesterification catalyst, whereupon glycerol is separated off and the product is purified, characterized in that the transesterification catalyst used is a mixture of alkali metal oxides and/or alkaline earth metal oxides and alkali metal alkoxides and/or alkaline earth metal alkoxides.

2. Process according to Claim 1, characterized in that the transesterification is carried out in a flow-through reactor (7), that the glycerol formed is subsequently separated off in a through centrifuge (10) together with any soaps formed, and that suspended materials are subsequently separated off from the product by filtration.

3. Process according to Claim 1 or 2, characterized in that from 0.5 to 5 % by weight, preferably from 1 to 2 % by weight, of alkali metal oxides and/or alkaline earth metal oxides, based on the oil or fat used, are used.

4. Process according to one of Claims 1, 2 and 3, characterized in that alkali metal alkoxides and/or alkaline earth metal alkoxides are used in an amount of from 5 to 30 % by weight of the oxides.

5. Process according to one of Claims 1 to 4, characterized in that the transesterification is carried out at a temperature of from 65 to 75°C.

6. Process according to one of Claims 1 to 5, characterized in that the transesterification is carried out at superatmospheric pressure.

7. Process according to one of Claims 1 to 6, characterized in that the residence time of the reactants in the flow-through reactor (7) is selected as less than 3 minutes, preferably from 30 to 60 seconds.

8. Apparatus for carrying out the process according to one of Claims 1 to 7, characterized by a tubular flow-through reactor (7), a through centrifuge (10) connected to the flow-through reactor, and a filtration unit (15).

9. Apparatus according to Claim 8, characterized in that the flow-through reactor (7) has an input pressure lock (6) and a discharge pressure lock (8).

10. Apparatus according to Claim 8 or 9, characterized in that upstream of the through centrifuge (10) there is connected a recuperator (12) from which a line (13) leads to the input lock of the flow-through reactor (7) or a mixer (1) connected upstream.

## Revendications

1. Procédé de production en continu d'esters d'acides gras à partir d'huiles ou de graisses végétales et animales par réaction avec des monoalcools inférieurs, avec utilisation d'alcoolates de métaux comme catalyseurs de transestérification, procédé selon lequel on sépare le glycérol et l'on purifie le produit, procédé caractérisé en ce qu'on utilise comme catalyseur de transestérification un mélange d'oxydes alcalins et/ou d'oxydes alcalino terreux et d'alcoolates alcalins et/ou d'alcoolates alcalino terreux.

2. Procédé selon la revendication 1, caractérisé en ce qu'on effectue la transestérification dans un réacteur (7) traversé [par le mélange réactionnel], en ce qu'on sépare ensuite, dans une centrifugeuse (10) traversée [par le mélange], le glycérol formé, ensemble avec des savons éventuellement formés, et en ce qu'on sépare ensuite, par filtration du produit, les matières en suspension.

3. Procédé selon la revendication 1 ou 2, caractérisé en ce qu'on utilise 0,5 à 5 % en poids, avantageusement 1 à 2 % en poids d'oxydes alcalins et/ou alcalino terreux, par rapport à l'huile ou à la matière grasse mise en oeuvre.

4. Procédé selon l'une quelconque des revendications 1, 2 ou 3, caractérisé en ce qu'on utilise les alcoolates alcalins et/ou alcalino terreux en une quantité de 5 à 30 % du poids des oxydes.

5. Procédé selon l'une revendications 1 à 4, caractérisé en ce qu'on effectue la transestérification à une température de 65 à 75°C.

6. Procédé selon l'une des revendications 1 à 5, caractérisé en ce qu'on effectue la transestérification sous une pression supérieure à la pression atmosphérique.

7. Procédé selon une des revendications 1 à 6, caractérisé en ce qu'on choisit, pour les corps destinés à réagir dans le réacteur (7) traversé (par le mélange réactionnel), un temps de séjour inférieur à 3 minutes, avantageusement un temps de séjour de 30 à 60 secondes.

8. Installation pour la mise en oeuvre du procédé selon l'une des revendications 1 à 7, caractérisée en ce qu'elle comporte un réacteur tubulaire (7) traversé (par le mélange réactionnel), une centrifugeuse (10) qui fait suite au réacteur et est traversée (par le mélange réactionnel) et une installation de filtration (15).

9. Installation selon la revendication 8, caractérisée en ce que le réacteur (7), traversé par le mélange réactionnel, présente un sas de pression (6) d'entrée et un sas de pression (8) de sortie.

10. Installation selon la revendication 8 ou 9, caractérisée en ce qu'en amont de la centrifugeuse (10) traversée par le mélange réactionnel, il y a un récupérateur (12), d'où part un conduit (13) menant vers le sas de pression d'entrée du réacteur (7), traversé par le mélange réactionnel, ou menant vers un mélangeur (1) monté en amont.
